# EUROPEAN PATENT APPLICATION

(11) **EP 4 650 673 A1**
(43) Date of publication of application: **19.11.2025**
(21) Application number: 25176570.7
(22) Date of filing: 15.05.2025
(51) Int. Cl.: F24D 19/08, F24H 15/12, B01D 19/00

(54) **BUILT-IN MEMBER AND GAS-LIQUID SEPARATOR**

(30) Priority: 17.05.2024 JP 2024080713
(71) Applicant: Panasonic Intellectual Property Management Co., Ltd., Kadoma-shi, Osaka 571-0057 (JP)
(72) Inventor: TANIYAMA, Makoto, Kadoma-shi, Osaka, 571-0057 (JP); FUJIMOTO, Takanobu, Kadoma-shi, Osaka, 571-0057 (JP); TSUTSUI, Gen, Akashi-shi, Hyogo (JP)
(74) Representative: Eisenführ Speiser

(57) **Abstract**

A built-in member in the present disclosure provides a built-in member that can increase a gas-liquid separation efficiency of a heating medium, without making an internal structure complex. The built-in member in the present disclosure is a built-in member stored inside a gas-liquid separator of a heating medium circulation device, the built-in member including a main body with an approximately truncated cone shape, and a through hole through which a heating medium passes, the through hole being formed on a side surface of the main body, in which the main body is disposed between an inflow port through which the heating medium flows in and an outflow port out of which the heating medium flows, the inflow port being provided on a side surface of the gas-liquid separator and the outflow port being provided at a position lower than a position of the inflow port.

## Description

### BACKGROUND OF THE INVENTION

### Field of the Invention

The present disclosure relates to a built-in member and a gas-liquid separator.

### Description of the Related Art

Japanese Patent Laid-Open No. 2022-126030 discloses a heating medium circulation system including a gas-liquid separation portion provided in a heating medium circuit at a downstream side of a utilization side heat exchanger and an upstream side of a utilization side terminal, the gas-liquid separation portion separating refrigerant from a heating medium, the refrigerant leaking into at least the heating medium circuit, and a discharge device connected to the gas-liquid separation portion, the discharge device discharging at least the refrigerant separated in the gas-liquid separation portion to the outside, in which an inflow pipe, through which at least the heating medium flows into the gas-liquid separation portion, and an outflow pipe, from which the heating medium flows out from the gas-liquid separation portion, are connected to the gas-liquid separation portion, and a position where at least the heating medium flows into the gas-liquid separation portion is lower than a position where the heating medium flows out from the gas-liquid separation portion.

The present disclosure provides a built-in member and a gas-liquid separator that can increase a gas-liquid separation efficiency of a heating medium, without making an internal structure complex.

### SUMMARY OF THE INVENTION

A built-in member in the present disclosure is a built-in member stored inside a gas-liquid separator of a heating medium circulation device, the built-in member including a main body with an approximately truncated cone shape, and a through hole through which a heating medium passes, the through hole being formed on a side surface of the main body, in which a plate shaped stopper member is provided on an upper end portion of the main body, and an opening is formed in the stopper member, the opening communicating allowing communication between upper side and lower side of the stopper member.

In the built-in member in the present disclosure, in the case where a heating medium collides with the main body of the built-in member, since a force pressing the main body downward is generated, the main body can be stably retained by a force of the heating medium flowing, and a separate fixing member or the like of the built-in member becomes unnecessary. Moreover, by having the heating medium collide with the main body of the built-in member, a separation ratio of refrigerant or air included in the heating medium can increase. In addition, a posture of the main body can be stabilized, by the stopper member, and separation of refrigerant or air included in the heating medium can be stably performed.

### BRIEF DESCRIPTION OF THE DRAWINGS

Figure 1 is a diagram showing a circuit of a heating medium circulation device relating to Embodiment 1;
Figure 2 is a perspective view showing the inside of a refrigeration device;
Figure 3 is a cross-sectional view showing a gas-liquid separator in Embodiment 1;
Figure 4 is a perspective view of a built-in member in Embodiment 1;
Figure 5 is a front view of the built-in member in Embodiment 1; and
Figure 6 is a cross-sectional view of the built-in member in Embodiment 1.

### DETAILED DESCRIPTION OF THE PREFERRED EMBODIMENT

### (Underlying knowledge of the present disclosure)

At the time when the inventors arrived at the idea of the present disclosure, a gas-liquid separator was known for separating refrigerant or air included in a heating medium from the heating medium, the gas-liquid separator including an inflow pipe, through which the heating medium flows into the gas-liquid separator, and an outflow pipe, from which the heating medium flows out from the gas-liquid separator.

However, in conventional technology, in order to promote separation between the heating medium and refrigerant or air, it will be necessary to form a flow path, through which the heating medium flows, inside the gas-liquid separator, and the inventors thus discovered that there is a problem in which there is a possibility of the internal structure of the gas-liquid separator becoming complicated, and in order to solve this problem, the inventors have arrived at constituting the subject of the present disclosure.

The present disclosure provides a built-in member and a gas-liquid separator that can increase a gas-liquid separation efficiency of a heating medium, without making an internal structure complex.

Hereinafter, an embodiment will be described in detail, while referring to the figures. However, there may be cases where a detailed description more than necessary is omitted. For example, there may be cases where a detailed description of already well-known matters or overlapping descriptions for substantially the same configurations are omitted. This is in order for the following description to avoid redundant descriptions more than necessary, and for the following description to facilitate understanding of a person skilled in the art.

Note that, the attached figures and following descriptions are presented in order for a person skilled in the art to sufficiently understand the present disclosure, and as a result of this, the attached figures and following descriptions are not intended to limit the subject of the description of the patent claims.

### (Embodiment 1)

Hereinafter, Embodiment 1 will be described, by using the figures.

### [1-1. Configuration]

### [1-1-1. Configuration of the refrigeration circuit]

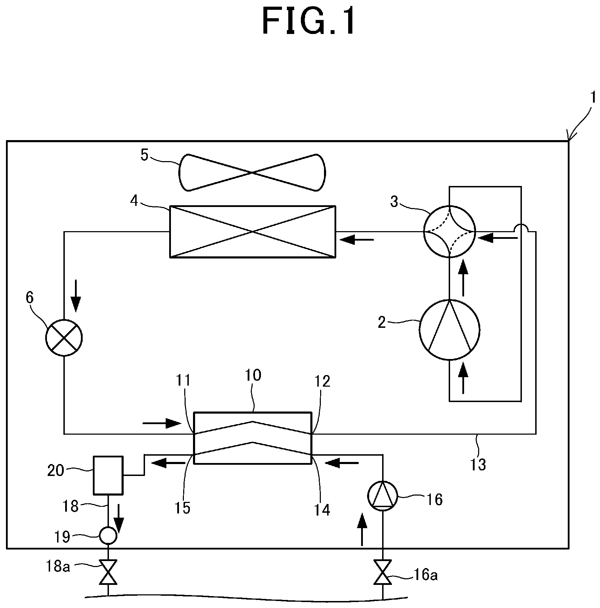

Figure 1 is a perspective view showing a heating medium circulation device 1 according to Embodiment 1.

In the present embodiment, the heating medium circulation device 1 is an outdoor unit of a heat pump type hot water supply heater. A hot water supply heater is a device that performs heating of an indoor space, by having a heating medium (for example, water) flow in a heat exchanger of an indoor unit, the heating medium having been heated by a refrigeration cycle of the heating medium circulation device 1. The hot water supply heater of the present embodiment can perform a cooling operation by having the heating medium cooled by the refrigeration cycle of the heating medium circulation device 1 flow in the indoor unit. In Figure 1, the flow of the refrigerant and the flow of the heating medium at the time of a cooling operation of the hot water heater are shown by arrows.

A compressor 2 is provided in the heating medium circulation device 1. The compressor 2 is a device that sucks in a refrigerant and compresses and discharges the refrigerant. In the heating medium circulation device 1, a flow path switching mechanism 3 is connected to a discharge side and a suction side of the compressor 2. The flow path switching mechanism 3 switches an inflow destination of the refrigerant discharged to the compressor 2 between an air heat exchanger 4 as a heat source side heat exchanger and a water heat exchanger 10 as a utilization side heat exchanger, and the flow path switching mechanism 3 causes the heat exchangers 4, 10 of an inflow destination to function as condensers. Moreover, the flow path switching mechanism 3 causes the refrigerant passing through an evaporator of each of the heat exchangers 4, 10 to be sucked into the compressor 2. The flow path switching mechanism 3 is, for example, a four-way valve.

The air heat exchanger 4 is a heat exchanger that exchanges heat between refrigerant on the inside and outside air. The air heat exchanger 4 is, for example, a fin tube type heat exchanger. A blower 5 is provided in the heating medium circulation device 1, the blower 5 causing the outside air to flow in the air heat exchanger 4. In the present embodiment, the blower 5 is an axial fan.

The water heat exchanger 10 is a plate type heat exchanger that exchanges heat between refrigerant flowing on the inside and a heating medium. The heating medium heated or cooled by the water heat exchanger 10 air-conditions an indoor space while the heating medium circulates between the heating medium circulation device 1 and the indoor unit.

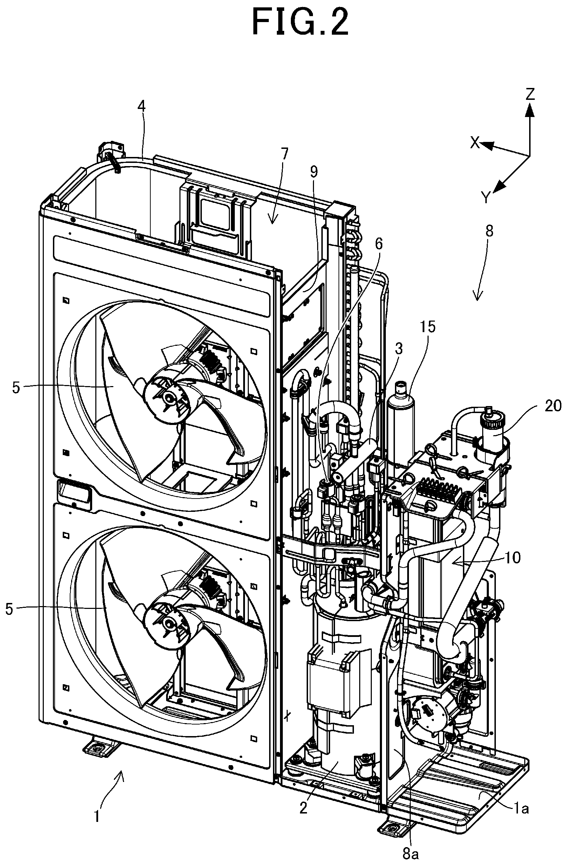

The air heat exchanger 4 and the water heat exchanger 10 are connected via an expansion valve 6. There is a receiver tank 15 between the water heat exchanger 10 and the expansion valve 6, the receiver tank 15 storing a low temperature and high pressure refrigerant in a liquid state cooled by the condenser (refer to Figure 2). The expansion valve 6 is a valve that reduces the pressure of the refrigerant flowing from the condenser via the receiver tank 15, from among each of the heat exchangers 4, 10, to set this refrigerant as a gas-liquid two phase state refrigerant, and causes the refrigerant to flow into the evaporator of each of the heat exchangers 4, 10. In the present embodiment, the degree of opening of the expansion valve 6 can be adjusted by an electronic control, and the flow amount of refrigerant is adjusted by having the degree of opening changed.

A circulation pump 16 and a valve 16a are provided on an inlet side of the water heat exchanger 10, the valve 16a being connectable with a water pipe on the outside.

A gas-liquid separator 20 is provided on a lower flow side of the water heat exchanger 10, the gas-liquid separator 20 removing refrigerant or air from the heating medium. A valve 18a is provided on an outlet side of the gas-liquid separator 20, the valve 18a being connectable via an outlet side water pipe 18 with a water pipe on the outside of the heating medium circulation device 1. Moreover, a flow rate sensor 19 is provided in the outlet side water pipe 18, the flow rate sensor 19 measuring a flow rate of the heating medium.

### [1-1-2. Configuration of the heating medium circulation device]

Figure 2 is a perspective view showing the inside of the heating medium circulation device. Within the figure, reference symbol X shows the left of the heating medium circulation device 1, reference symbol Y shows the front of the heating medium circulation device 1, and reference symbol Z shows above.

As shown in Figure 1, a blower chamber 7 and a machine chamber 8 are formed on the inside of the heating medium circulation device 1, the blower chamber 7 being a space partitioned on the left side of a partition plate 9 and the machine chamber 8 being a space partitioned on the right side of the partition plate 9. The partition plate 9 is formed of a plate metal, and the partition plate 9 is provided at a posture roughly perpendicular to the left-right direction.

The air heat exchanger 4 and the blower 5 are provided in the blower chamber 7. The air heat exchanger 4 is provided on a right side surface and a rear surface of the blower chamber 7. The blower 5 sucks in outside air via the air heat exchanger 4 by blowing out air inside the heating medium circulation device 1 toward the front, thereby causing the outside air and the refrigerant inside the air heat exchanger 4 to exchange heat. In the present embodiment, while a heating medium circulation device 1 having two of the blowers 5 provided vertically in a row in the blower chamber 7 has been described as an example, there is no particular limitation to the number of blowers 5 of the heating medium circulation device 1.

The compressor 2, the flow path switching mechanism 3, the expansion valve 6, the receiver tank 15, the water heat exchanger 10, and the gas-liquid separator 20 are provided in the machine chamber 8. The compressor 2 is placed on a bottom plate 1a of the heating medium circulation device 1 via legs made of rubber. The flow path switching mechanism 3 is disposed above the compressor 2. The water heat exchanger 10 is provided at a position separated above from the bottom plate 1a, via a support member 8a formed by a metal plate.

A valve 18a is provided on an outlet side of the gas-liquid separator 20, the valve 18a being connectable via an outlet side water pipe 18 with a water pipe on the outside of the heating medium circulation device 1. Moreover, a flow rate sensor 19 is provided in the outlet side water pipe 18, the flow rate sensor 19 measuring a flow rate of water.

### [1-1-3. Configuration of the gas-liquid separator]

Next, a configuration of the gas-liquid separator 20 in Embodiment 1 will be described.

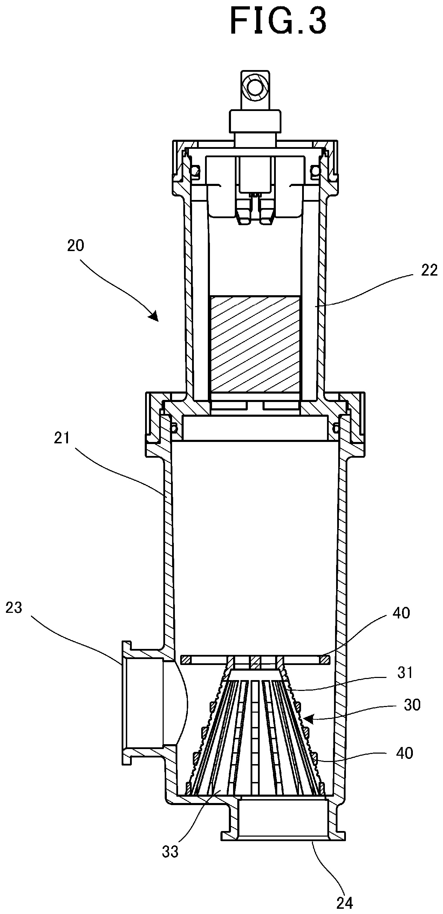

Figure 3 is a cross-sectional view of the gas-liquid separator in Embodiment 1.

As shown in Figure 3, the gas-liquid separator 20 includes a separator main body 21 with an approximately cylindrical shape.

An exhaust portion 22 is attached to the upper portion of the separator main body 21, the exhaust portion 22 collecting separated refrigerant or air and exhausting the collected refrigerant or air from the heating medium circulation device 1.

An inflow port 23 is provided on a lower side surface of the separator main body 21, the inflow port 23 being connected with an inflow pipe of the heating medium. An outflow port 24 is provided on the lower surface of the separator main body 21, the outflow port 24 being connected with an outflow pipe of the heating medium.

The heating medium is configured so that the heating medium is sent to the inside of the separator main body 21 via the inflow port 23, and the heating medium is sent to the outside from the outflow port 24 after the heating medium and refrigerant or air are separated within the separator main body 21.

A built-in member 30 is stored inside the separator main body 21.

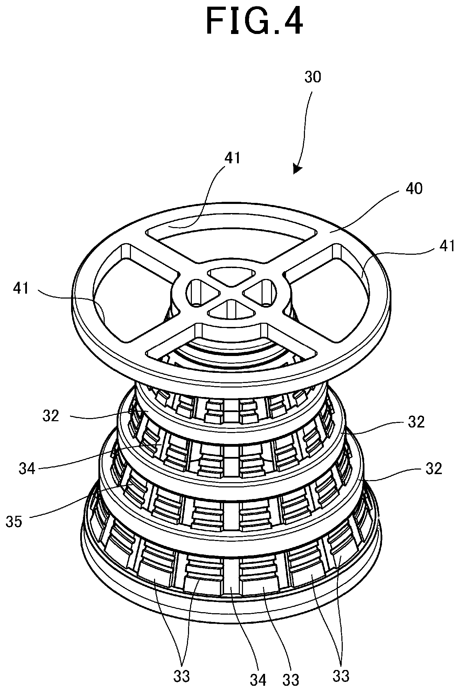

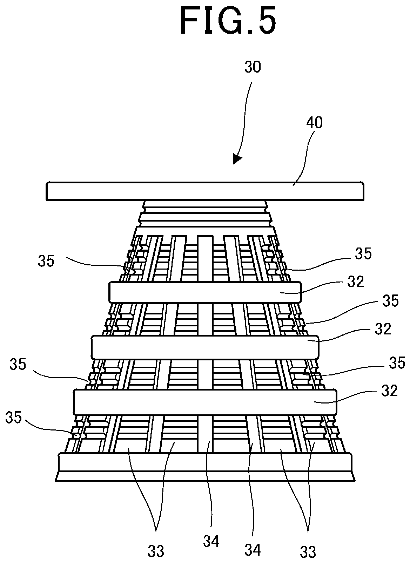

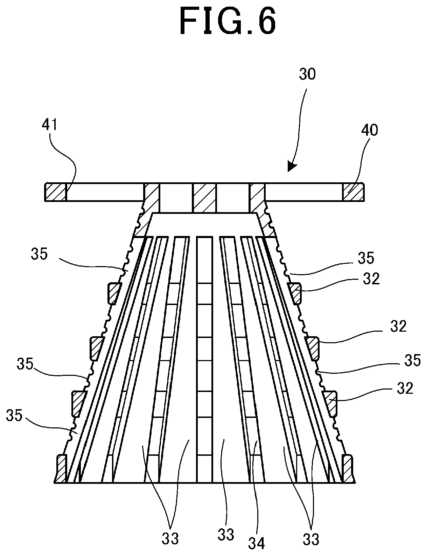

Figure 4 is a perspective view showing the built-in member in Embodiment 1. Figure 5 is a front view of the built-in member in Embodiment 1. Figure 6 is a cross-sectional view of the built-in member in Embodiment 1.

As shown in Figure 4 to Figure 6, the built-in member 30 includes an approximately truncated cone shaped main body 31 with an outer diameter at the bottom that is large.

The upper end portion of the main body 31 has a height that is approximately the same as the upper end position of the inflow port 23. The lower end portion of the main body 31 is disposed to cover the entire outflow port 24.

A plurality of annular horizontal support members 32 is provided on a circumferential surface of the main body 31, each of the horizontal support members 32 extending in a circumferential direction. A plurality of vertical support members 33 is provided on the main body 31, each of the vertical support members 33 extending in an up-down direction and each of the vertical support members 33 being spaced apart at predetermined intervals in the circumferential direction of the main body 31.

By providing the horizontal support members 32 and the vertical support members 33, slit shaped through holes 34 are formed between the horizontal support members 32 and the vertical support members 33. In this way, the heating medium flowing in from the inflow port 23, via the through holes 34, can be made to pass through the inside of the main body 31 from the outside of the main body 31, via the through holes 34, and the heating medium can be made to flow from the inside of the main body 31 to the outflow port 24.

Moreover, a plurality of minute notches 35 is formed on the outer surface of each of the vertical support members 33. A minute uneven shape is formed on the outer surface of each of the vertical support members, by the notches 35.

Note that, in the present embodiment, while the notches 35 are formed on each of the vertical support members 33, the present disclosure is not limited to this. For example, the notches 35 may be formed on each of the horizontal support members 32, or the notches 35 may be formed on both of each of the vertical support members 33 and each of the horizontal support members 32.

A stopper member 40 with an approximately disc shape is integrally provided on the upper end of the main body 31. The outer diameter of the stopper member 40 is formed with dimensions that are slightly larger than the dimensions of the outer diameter of the lower end portion of the main body 31.

A plurality of openings 41 with an approximately fan shape is formed on the stopper member 40, each of the plurality of openings 41 for allowing communication between upper side and lower side of the stopper member 40.

The stopper member 40 is provided so that the height position of the stopper member 40 is approximately the same as the height of the upper edge portion of the inflow port 23.

### [1-2. Action]

The action of the heating medium circulation device 1 configured such as above will be described.

At the time of a cooling operation, as shown in Figure 1, the flow path switching mechanism 3 causes the refrigerant discharged from the compressor 2 to flow to the air heat exchanger 4 to dissipate heat. The refrigerant that radiates heat in the air heat exchanger 4 liquifies to pass through the expansion valve 6, and this refrigerant becomes a gas-liquid two phase state refrigerant to flow into the water heat exchanger 10.

The gas-liquid two phase state refrigerant flowing into the water heat exchanger 10 absorbs heat from the heating medium flowing in the water heat exchanger 10 to evaporate, and this refrigerant becomes a gas refrigerant to return to the compressor 2.

On the other hand, the heating medium that exchanges heat in the water heat exchanger 10 cools an indoor space, by causing water to circulate between the indoor unit and the water heat exchanger 10 while cooling the water, in accordance with the driving of the circulation pump 16.

Here, the heating medium that flows into the water heat exchanger and exchanges heat with the refrigerant flows to the inside of the separator main body 21 from the inflow port 23 of the gas-liquid separator 20.

The heating medium flowing in from the inflow port 23 collides with the main body 31 of the built-in member 30.

At this time, since the main body 31 is formed in an approximately truncated cone shape, a force pressing the main body 31 downward is generated, by having this heating medium collide with the main body 31.

Accordingly, the main body 31 can be fixed to the lower surface of the separator main body 21, by a force of the heating medium flowing in from the inflow port 23, and a separate fixing member or the like of the built-in member 30 becomes unnecessary.

Moreover, since the stopper member 40 is provided, and there is only space with a small distance to move where the outer periphery of the stopper member 40 makes contact with the inner surface of the separator main body 21, the stopper member 40 can be restrained from greatly moving. In this way, a posture of the main body 31 can be stabilized, and separation of refrigerant or air included in the heating medium can be stably performed.

In the present embodiment, since vertical support members 33 and horizontal support members 32 are provided on the main body 31, when the heating medium collides with the main body 31, the heating medium collides with each of the vertical support members 33 and each of the horizontal support members 32, and it therefore becomes possible to increase a collision frequency of the heating medium. In this way, a separation ratio of refrigerant or air included in the heating medium can be increased.

Moreover, since notches 35 are formed on the outer surface of each of the vertical support members 33, when the heating medium collides with each of the vertical support members 33, a collision frequency of the heating medium can increase by an irregular shape formed by the notches 35, and a separation ratio of refrigerant or air included in the heating medium can be increased.

The heating medium, from which refrigerant or air is separated by having the heating medium collide with each of the vertical support members 33 and each of the horizontal support members 32, flows to the inside of the main body 31 via each of the through holes 34, and the heating medium flows out from the outflow port 24.

On the other hand, the refrigerant or air separated from the heating medium is collected in an inner and upper side in the separator main body 21, and this refrigerant or air is exhausted to the outside from the heating medium circulation device 1 via the exhaust portion 22.

### [1-3. Effect or the like]

As described above, a built-in member 30 in the present embodiment includes a main body 31 with an approximately truncated cone shape, and a through hole 34 through which a heating medium passes, the through hole 34 being formed on a side surface of the main body 31, in which a plate shaped stopper member 40 is provided on an upper end portion of the main body 31, and an opening 41 is formed in the stopper member 40, the opening 41 allowing communication between upper side and lower side of the stopper member 40.

In this way, in the case where a heating medium collides with the main body 31 of the built-in member 30, since a force pressing the main body 31 downward is generated, the main body 31 can be stably retained by a force of the heating medium flowing, and a separate fixing member or the like of the built-in member 30 becomes unnecessary. Moreover, by having the heating medium collide with the main body 31 of the built-in member 30, a separation ratio of refrigerant or air included in the heating medium can increase. In addition, a posture of the main body 31 can be stabilized, by the stopper member 40, and separation of refrigerant or air included in the heating medium can be stably performed.

Moreover, in the built-in member 30 in the present embodiment, a plurality of horizontal support members 32 and a plurality of vertical support members 33 are provided on a peripheral surface of the main body 31, each of the plurality of horizontal support members 32 extending in a circumferential direction and each of the plurality of vertical support members 33 extending in an up-down direction, and the through hole 34 is formed between the horizontal support members 32 and the vertical support members 33.

In this way, since the vertical support members 33 and the horizontal support members 32 are provided in the main body 31, when a heating medium collides with the main body 31, the heating medium collides with each of the vertical support members 33 and each of the horizontal support members 32, and it therefore becomes possible to increase a collision frequency of the heating medium. Accordingly, a separation ratio of refrigerant or air included in the heating medium can be increased.

Moreover, in the built-in member 30 in the present embodiment, a plurality of minute notches 35 is formed on an outer surface of at least one of the vertical support member 33 or the horizontal support member 32.

In this way, since notches 35 are formed on an outer surface of at least one of the vertical support member 33 or the horizontal support member 32, when a heating medium collides with this vertical support member 33, a collision frequency of the heating medium can increase by an irregular shape formed by the notches 35, and a separation ratio of refrigerant or air included in the heating medium can be increased.

Moreover, in the built-in member 30 in the present embodiment, the main body 31 is disposed between an inflow port 23 into which the heating medium flows and an outflow port 24 out of which the heating medium flows, the inflow port 23 being provided on a side surface of the gas-liquid separator 20 and the outflow port 24 being provided at a position lower than a position of the inflow port 23.

In this way, in the case where a heating medium collides with the main body 31 of the built-in member 30, the heating medium flowing in from the inflow port 23, since a force pressing the main body 31 downward is generated, the main body 31 can be fixed to a lower surface of the separator main body 21 by a force of the heating medium flowing in from the inflow port 23, and a separate fixing member or the like of the built-in member 30 becomes unnecessary. Moreover, by having the heating medium collide with the main body 31 of the built-in member 30, the heating medium flowing in from the inflow port 23, a separation ratio of refrigerant or air included in the heating medium can increase.

Moreover, in the built-in member 30 in the present embodiment, the main body 31 has a height higher than a height of an inflow port 23 into which the heating medium flows to the gas-liquid separator 20, and an inside of the main body 31 is disposed to cover an outflow port 24 out of which the heating medium flows from the gas-liquid separator 20.

In this way, a space for collecting separated refrigerant or air can be secured above the separator main body 21, and an exhaust from the separator main body 21 can be smoothly performed.

### (Other embodiments)

As described above, Embodiment 1 has been described as an exemplification of the technology disclosed in the present application. However, the technology in the present disclosure is not limited to this, and the technology in the present disclosure can be applied to embodiments that perform modifications, substitutions, additions, omissions or the like. Moreover, it is possible to form new embodiments, by combining each of the constituent elements described in Embodiment 1.

Accordingly, other embodiments will be hereinafter exemplified.

In Embodiment 1, while the height of the main body 31 is formed to be approximately the same as the height of the inflow port 23, the present disclosure is not limited to this. For example, the height of the main body 31 may be formed to be higher than the height of the inflow port 23. Namely, the height of the main body 31 can be arbitrarily set, if the main body 31 is configured so that the heating medium flowing in from the inflow port 23 collides with the side surface of the main body 31.

Moreover, for example, an embossing process may be applied to the surface of the main body 31 of the built-in member 30. By applying such an embossing process, since very fine irregularities can be formed on the surface of the main body 31, a collision frequency with the flowing-in heating medium can be further increased, and a high separation ratio can be expected.

### (Additional remarks)

The following technologies are disclosed by the above-stated descriptions of the embodiment.

(Technology 1) A built-in member stored inside a gas-liquid separator of a heating medium circulation device, the built-in member including a main body with an approximately truncated cone shape, and a through hole through which a heating medium passes, the through hole being formed on a side surface of the main body, in which a plate shaped stopper member is provided on an upper end portion of the main body, and an opening is formed in the stopper member, the opening allowing communication between upper side and lower side of the stopper member.

According to this configuration, in the case where a heating medium collides with the main body of the built-in member, since a force pressing the main body downward is generated, the main body can be stably retained by a force of the heating medium flowing, and a separate fixing member or the like of the built-in member becomes unnecessary. Moreover, by having the heating medium collide with the main body of the built-in member, a separation ratio of refrigerant or air included in the heating medium can increase. In addition, a posture of the main body can be stabilized, by the stopper member, and separation of refrigerant or air included in the heating medium can be stably performed.

(Technology 2) The built-in member described in Technology **1,** in which a plurality of horizontal support members and a plurality of vertical support members are provided on a peripheral surface of the main body, each of the plurality of horizontal support members extending in a circumferential direction and each of the plurality of vertical support members extending in an up-down direction, and the through hole is formed between the horizontal support members and the vertical support members.

According to this configuration, since each of the vertical support members and each of the horizontal support members are provided in the main body, when a heating medium collides with the main body, the heating medium collides with each of the vertical support members and each of the horizontal support members, and it therefore becomes possible to increase a collision frequency of the heating medium. Accordingly, a separation ratio of refrigerant or air included in the heating medium can be increased.

(Technology 3) The built-in member described in Technology **2,** in which a plurality of minute notches are formed on an outer surface of at least one of the vertical support member or the horizontal support member.

According to this configuration, since notches are formed on an outer surface of at least one of the vertical support member or the horizontal support member, when a heating medium collides with this vertical support member, a collision frequency of the heating medium can increase by an irregular shape formed by the notches, and a separation ratio of refrigerant or air included in the heating medium can be increased.

(Technology 4) The built-in member described in any one of Technology 1 to Technology 3, in which the main body is disposed between an inflow port through which the heating medium flows in and an outflow port out of which the heating medium flows, the inflow port being provided on a side surface of the gas-liquid separator and the outflow port being provided at a position lower than a position of the inflow port.

According to this configuration, in the case where a heating medium collides with the main body of the built-in member, the heating medium flowing in from the inflow port, since a force pressing the main body downward is generated, the main body can be fixed to a lower surface of the separator main body by a force of the heating medium flowing in from the inflow port, and a separate fixing member or the like of the built-in member becomes unnecessary. Moreover, by having the heating medium collide with the main body of the built-in member, the heating medium flowing in from the inflow port, a separation ratio of refrigerant or air included in the heating medium can increase.

(Technology 5) The built-in member described in any one of Technology 1 to Technology 4, in which the main body has a height higher than a height of an inflow port through which the heating medium flows into the gas-liquid separator, and an inside of the main body is disposed to cover an outflow port out of which the heating medium flows from the gas-liquid separator.

According to this configuration, a space for collecting separated refrigerant or air can be secured above the separator main body, and an exhaust from the separator main body can be smoothly performed.

(Technology 6) A gas-liquid separator in which the built-in member described in any one of Technology 1 to Technology 5 is stored.

According to this configuration, in the case where a heating medium collides with the main body of the built-in member, the heating medium flowing in from the inflow port, since a force pressing the main body downward is generated, the main body can be fixed to a lower surface of the separator main body by a force of the heating medium flowing in from the inflow port, and a separate fixing member or the like of the built-in member becomes unnecessary. Moreover, by having the heating medium collide with the main body of the built-in member, the heating medium flowing in from the inflow port, a separation ratio of refrigerant or air included in the heating medium can increase.

The present disclosure can be suitably used as a built-in member that can increase a gas-liquid separation efficiency of a heating medium, without making an internal structure complex. Reference Signs List
- 1: heating medium circulation device
- 2: compressor
- 3: flow path switching mechanism
- 4: air heat exchanger
- 5: blower
- 6: expansion valve
- 7: blower chamber
- 8: machine chamber
- 9: partition plate
- 10: water heat exchanger
- 15: receiver tank
- 16: circulation pump
- 18: outlet side water pipe
- 19: flow rate sensor
- 20: gas-liquid separator
- 21: separator main body
- 22: exhaust portion
- 23: inflow port
- 24: outflow port
- 30: built-in member
- 31: main body
- 32: horizontal support member
- 33: vertical support member
- 34: through hole
- 35: notch
- 40: stopper member
- 41: opening

## Claims

1. A built-in member (30) stored inside a gas-liquid separator (20) of a heating medium circulation device (1), the built-in member **characterized by** comprising:
a main body (31) with an approximately truncated cone shape; and
a through hole (34) through which a heating medium passes, the through hole being formed on a side surface of the main body, wherein
a plate shaped stopper member (40) is provided on an upper end portion of the main body, and
an opening (41) is formed in the stopper member, the opening allowing communication between upper side and lower side of the stopper member.

2. The built-in member according to claim **1,** wherein
a plurality of horizontal support members (32) and a plurality of vertical support members (33) are provided on a peripheral surface of the main body, each of the plurality of horizontal support members extending in a circumferential direction and each of the plurality of vertical support members extending in an up-down direction, and
the through hole is formed between the horizontal support members and the vertical support members.

3. The built-in member according to claim 2, wherein
a plurality of minute notches (35) are formed on an outer surface of at least one of the vertical support member or the horizontal support member.

4. The built-in member according to claim **1,** wherein
the main body is disposed between an inflow port (23) through which the heating medium flows in and an outflow port (24) out of which the heating medium flows, the inflow port being provided on a side surface of the gas-liquid separator and the outflow port being provided at a position lower than a position of the inflow port.

5. The built-in member according to claim **1,** wherein
the main body has a height higher than a height of an inflow port (23) through which the heating medium flows into the gas-liquid separator, and an inside of the main body is disposed to cover an outflow port (24) out of which the heating medium flows from the gas-liquid separator.

6. A gas-liquid separator (20) in which the built-in member according to any one of claims 1 to 5 is stored.
